# EUROPÄISCHE PATENTSCHRIFT

(11) **EP 1 270 127 B1**
(45) Veröffentlichungstag und Bekanntmachung des Hinweises auf die Patenterteilung: **09.06.2004**
(21) Anmeldenummer: 02008117.0
(22) Anmeldetag: 11.04.2002
(51) Int. Cl.: B23F 19/10

(54) **Werkzeug zum Anfasen und Entgraten der stirnseitigen Zahnkanten von Zahnrädern**
Tool for chamfering and deburring frontal tooth ends of gears
Outil de chanfreinage et d'ébavurage des extrémités frontales de dents des roues dentées

(30) Priorität: 21.06.2001 DE 10129853
(43) Veröffentlichungstag der Anmeldung: 02.01.2003
(73) Patentinhaber: The Gleason Works, Rochester, New York 14607-1282 (US)
(72) Erfinder: Daniek, Thomas, 86926 Greifenberg (DE)
(74) Vertreter: Stahl, Gerhard F.W.

(56) Entgegenhaltungen:
- DE-C- 4 020 611
- DE-C- 4 441 927
- GB-A- 1 388 993
- US-A- 5 154 553

## Beschreibung

Die Erfindung betrifft ein Werkzeug zum Anfasen und Entgraten der stirnseitigen Zahnkanten von gerad- und schrägverzahnten Zahnrädern (siehe, zum Beispiel DE 4020611) mit mindestens einem stirnseitig zum Werkstück angeordneten und mit diesem kämmenden, die Zahnkanten bearbeitenden Wälzgratrad, einer axial neben dem Wälzgratrad angeordneten, mit diesem drehfest verbundenen und mit dem Werkstück kämmenden verzahnten Distanzscheibe, die über einen Teil des Umfangs als Mitnahmerad und über den übrigen Teil des Umfangs als die Randzonen der Zahnflanken bearbeitendes Glättrad ausgebildet ist.

Ein derartiges Werkzeug ist aus dem Firmenprospekt "Gleason-HURTH Wälzentgratwerkzeuge" bekannt. Bei spanend hergestellten Zahnrädern wird an den stirnseitigen Zahnkanten ein Grat gebildet, der aus verschiedenen Gründen beseitigt werden muß. Ein solcher Grat ist hinderlich, weil in den nachfolgenden Arbeitsgängen eine Planfläche, z. B. die Stirnfläche des Zahnrades, oft als Spann- und Bestimmungsfläche dienen soll. Ein besonderes Risiko für die Verzahnung ist ein gehärteter Grat, der spätestens beim Lauf im Getriebe abspringt und die Zahnflanken beschädigen kann. Ganz abgesehen davon, daß ein stehengebliebener Grat auch eine Verletzungsgefahr beim Handhaben der Werkstücke darstellt. Aus diesen Gründen werden bereits seit langem zahlreiche Verfahren und Vorrichtungen zum Entfernen des Grates benützt. Doch genügt es zumeist nicht, nur die Grate zu beseitigen. Beim Härten beispielsweise besteht die Gefahr, daß die spitze Kante durch Überkohlung glashart wird und dann unter Belastung ausbricht. Deshalb muß die stirnseitige Zahnkante zusätzlich mit einer Phase versehen werden; sie schützt zudem die aktive Zahnoberfläche vor Beschädigungen. Dieses Ziel wird mit der gattungsgemäßen Vorrichtung erreicht, indem Material des Werkstücks an der Kante zwischen der Zahnflanke und der Stirnfläche verdrängt wird, um eine ein- oder zweiflankige Phase zu erzeugen. Bei dieser plastischen Verformung wird das Material des Werkstücks vom Wälzgratrad zur Stirnfläche hin und in die Zahnflanke verdrängt, wodurch ein sogenannter Sekundärgrat entsteht. Dieser Sekundärgrat wurde früher mit einem Schneidstahl stirnseitig und mit einem mit dem Werkstück kämmenden verzahnten Glättrad beseitigt. Beim Stand der Technik war dieses Glättrad ein von dem mit dem oder den Wälzgraträdern drehfest verbundenen Mitnahmerad unabhängiges Bauteil. Aus dem eingangs erwähnten Firmenprospekt ist auch bereits ein gattungsgemäßes Werkzeug bekannt, bei dem die mit dem oder den Wälzgraträdern drehfest verbundene Distanzscheibe sowohl die Funktion des Mitnahmerades als auch die Funktion des Glättrades übernimmt. Mann könnte daher auch von einem kombinierten Mitnahme- und Glättrad sprechen. Um mit dem als Glättrad dienenden Umfangsbereich der Distanzscheibe im Naß- und Trockenverfahren optimale Glättergebnisse zu erzielen, muß der Schrägungswinkel der Verzahnung des Glättbereichs exakt demjenigen des Werkstücks entsprechen. Wenn diese Voraussetzung nicht erfüllt ist, dann entstehen Grataufwürfe in den Zahnflanken des Werkstücks, die bei einer anschließenden Hartfeinbearbeitung zu einem vorzeitigen Verschleiß des Feinbearbeitungswerkzeugs führen. Erfahrungsgemäß ändert sich der Schrägungswinkel der zu bearbeitenden Werkstücke aber ständig aus folgenden Gründen:
1. Unterschiedliche Verhaltensweisen der Werkstoffe beim Härten.
2. Es sind unterschiedliche Härteöfen im Einsatz.
3. Fertigtoleranzen beim Wälzfräsen.

Da der Anwender des gattungsgemäßen Werkzeugs vor Ort keine andere Möglichkeit hat, als den Achsabstand in der Entgratmaschine zu verändern, wird zumeist dieser Weg gewählt, der aber falsch ist. Bei einer Verringerung des Achsabstandes wird nämlich das Material am Werkstück derart verdichtet, daß ein Materialabtrag für eine nachfolgende Hartfeinbearbeitung sehr erschwert wird.. Dies bedeutet ebenfalls einen vorzeitigen Verschleiß des Werkzeugs. Wird hingegen der Achsabstand vergrößert, dann wächst dementsprechend der Grataufwurf.

Der Erfindung liegt die Aufgabe zugrunde, das gattungsgemäße Werkzeug dahingehend weiterzubilden, daß es eine Anpassung an Schwankungen des Schrägungswinkels der zu bearbeitenden Zahnräder ermöglicht.

Erfindungsgemäß wird diese Aufgabe dadurch gelöst, daß die Distanzscheibe in mindestens zwei Scheiben unterteilt ist, die dreheinstellbar miteinander verbunden sind. Die erfindungsgemäße Ausbildung des Werkzeugs ermöglicht es dem Benutzer, auf Schwankungen des Schrägungswinkels am Werkstück sofort zu reagieren. Zu diesem Zweck wird die Relativstellung der beiden Scheiben so verändert, daß die im Glättbereich angeordneten Zähne an den Zahnflanken des Werkstücks ordnungsgemäß zur Anlage gelangen und den dort vorhandenen Sekundärgrad beseitigen. Da jede der beiden Scheiben nur einen der beiden Ränder jeder Zahnflanke des Werkstücks bearbeitet, kann das bei einem einteiligen Glättrad erforderliche Hohlschleifen der Flankenlinien entfallen

Die beiden Scheiben des erfindungsgemäßen Werkzeugs sind vorzugsweise in Umfangsrichtung so versetzt angeordnet, daß der als Glättrad dienende Bereich der einen Scheibe dem als Mitnahmerad dienenden Bereich der anderen Scheibe gegenüberliegt. Dadurch ist eine größere Laufruhe während der Bearbeitung gewährleistet. Außerdem können das Glätt- und Entgratergebnis jeder Planseite gezielt eingestellt werden. Ferner können die Fasenbreiten und der Schrägungswinkel des Glättbereichs unabhängig voneinander optimiert werden.

Bei einer besonders vorteilhaften Ausführungsform des erfindungsgemäßen Werkzeugs ist vorgesehen, daß die eine Scheibe mit zwei in Umfangsrichtung versetzten Gewindebohrungen versehen ist, daß die andere Scheibe mit zwei Bohrungen versehen ist, die einen anderen Winkelabstand aufweisen als die Gewindebohrungen und mit diesen teilweise überlappen, und daß in die Gewindebohrungen der einen Scheibe Einstellschrauben mit kegeligem Ansatz eingeschraubt sind, derart, daß die kegeligen Ansätze die Ränder der Bohrungen der anderen Scheibe nur in einem Teilbereich berühren. Durch Eindrehen der einen Schraube und entsprechendes Herausdrehen der anderen Schraube kann eine Relativverdrehung der beiden Scheiben des Werkzeugs in einer Richtung erzielt werden.

Ein bevorzugtes Ausführungsbeispiel der Erfindung ist in den Zeichnungen dargestellt und wird nachfolgend näher erläutert. Es zeigt:
Fig. 1 ein Werkzeug zum Bearbeiten der Stirnkanten von Zahnrädern, teilweise im Schnitt und teilweise in der Ansicht,
Fig. 2 eine Seitenansicht des Werkzeugs nach Fig. 1,

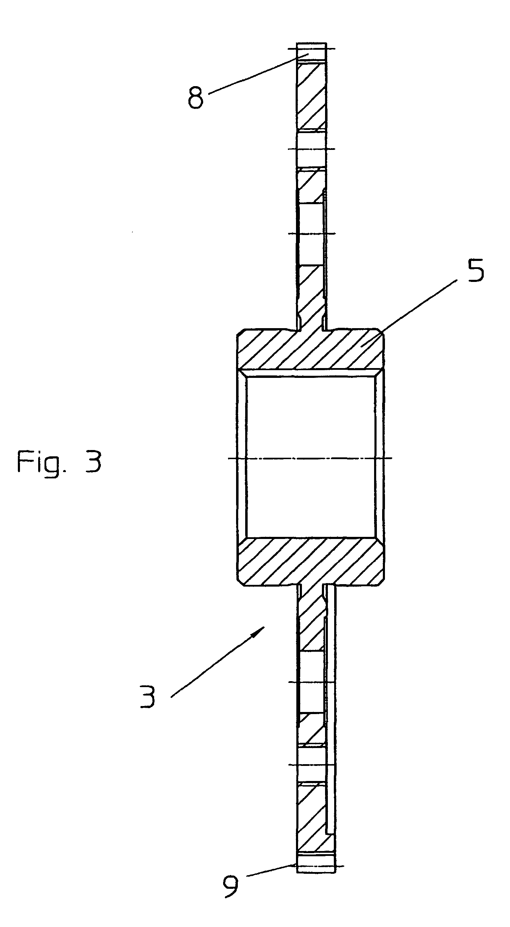

Fig. 3 einen Axialschnitt durch ein erstes Scheibenteil eines kombinierten Mitnahme- und Glättrades,

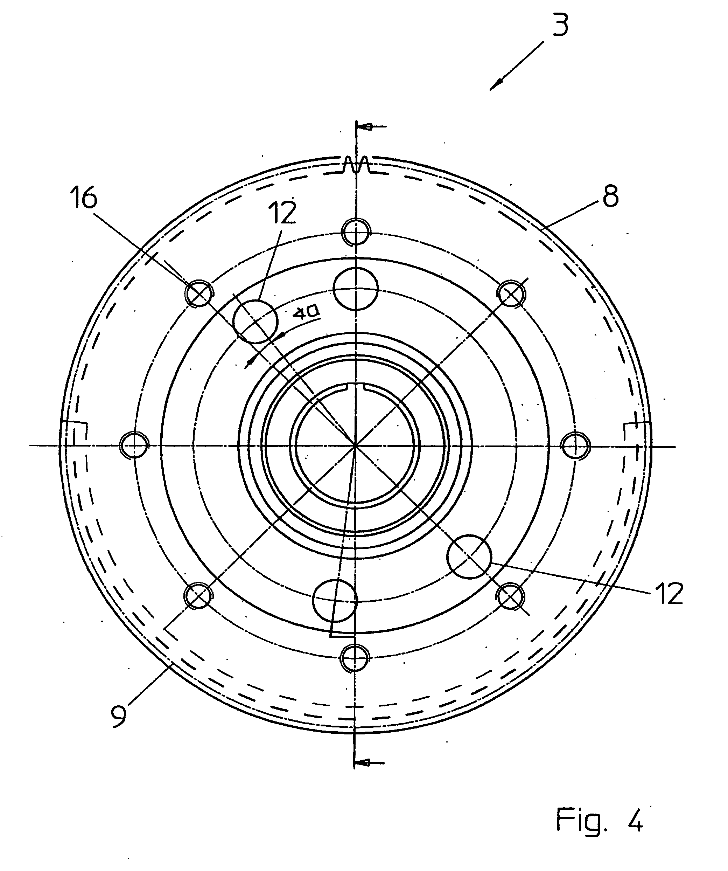

Fig. 4 eine Seitenansicht des ersten Scheibenteils nach Fig. 3,

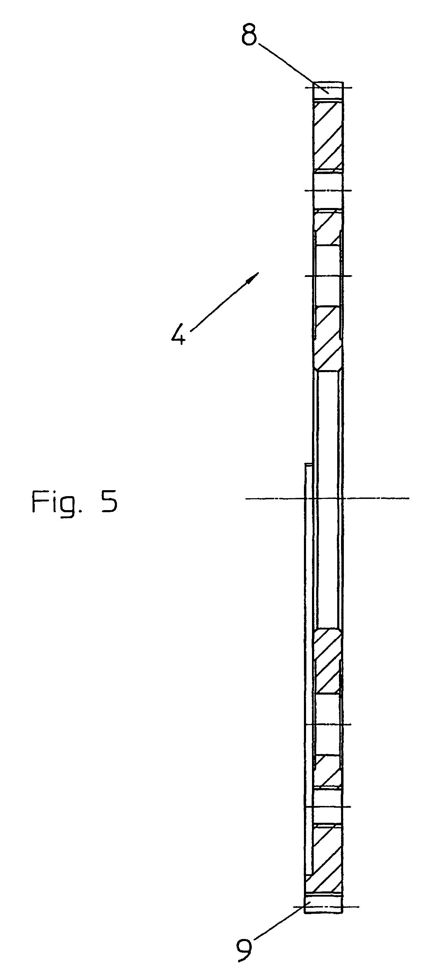

Fig. 5 einen Axialschnitt durch ein zweites Scheibenteil des kombinierten Mitnahme- und Glättrades,

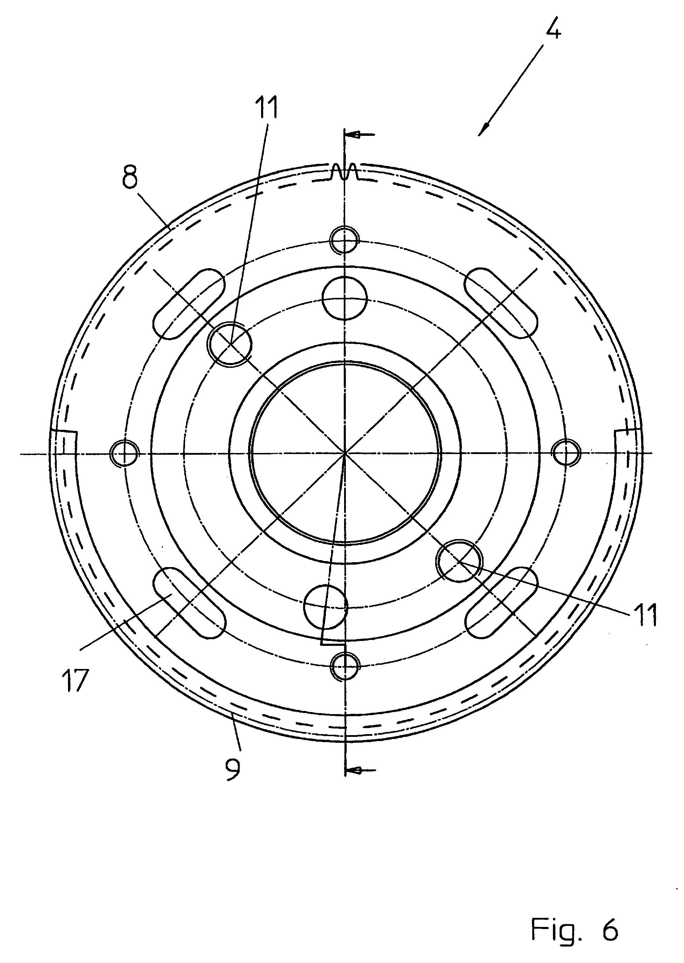

Fig. 6 eine Seitenansicht des zweiten Scheibenteils nach Fig. 5,
Fig. 7 einen Schnitt durch den Eingriffsbereich des Werkzeugs mit einem Werkstück als Abwicklung, und
Fig. 8 einen Schnitt durch das erste und zweite Scheibenteil entlang eines Lochkreises als Abwicklung.

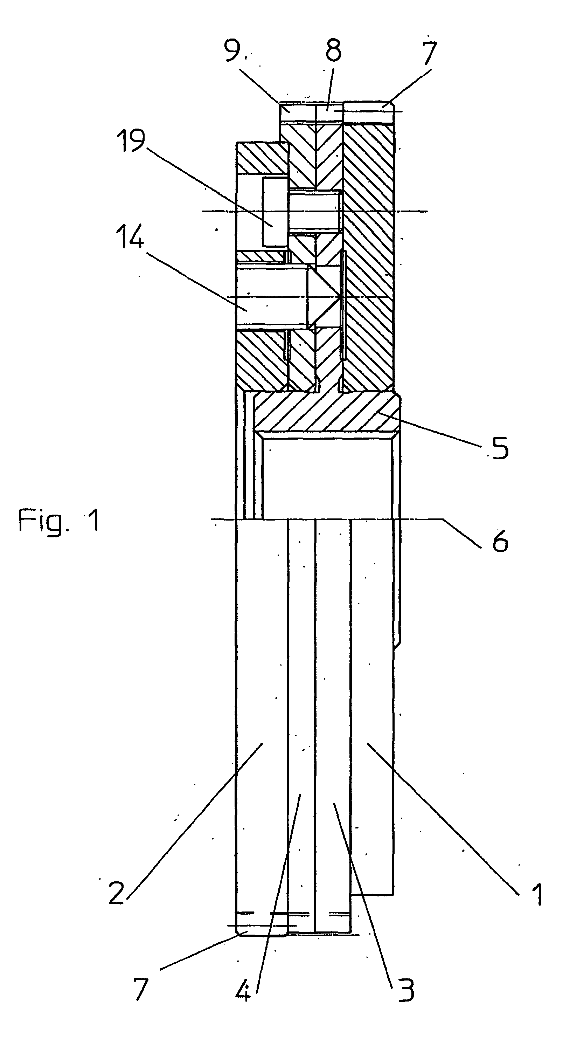

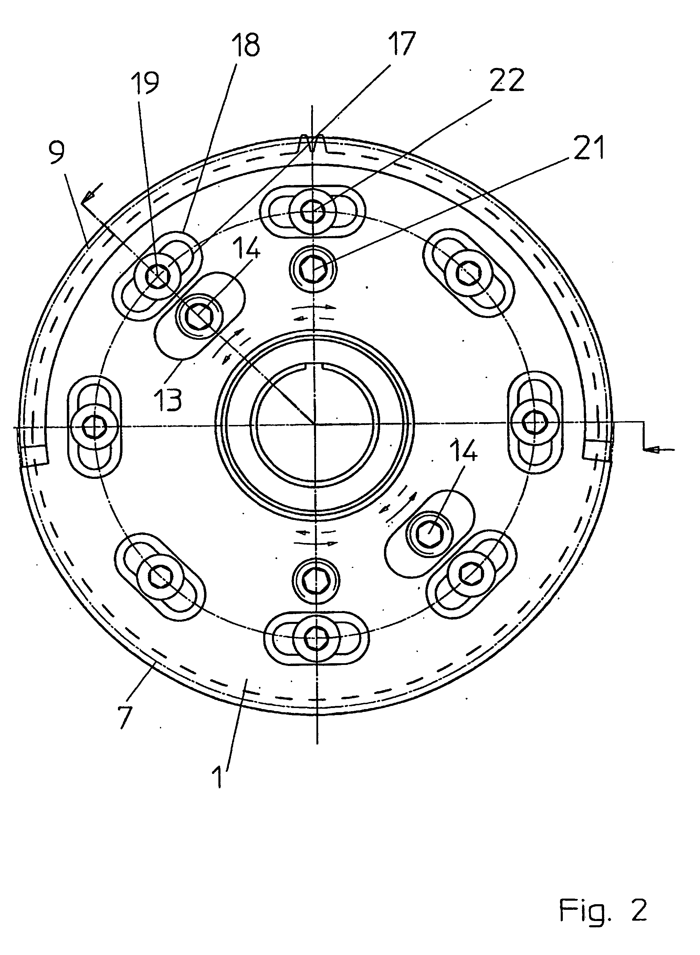

Das in den Fig. 1 und 2 gezeigte Werkzeug zum Anfasen und Entgraten der stirnseitigen Zahnkanten von gerad- und schrägverzahnten Zahnrädern besteht aus einem ersten und zweiten Wälzgratrad 1 und 2, die zwischen sich ein erstes und zweites Scheibenteil 3 und 4 aufnehmen. Das erste und zweite Scheibenteil 3 und 4 bilden gemeinsam ein kombiniertes Mitnahme- und Glättrad. Das erste Scheibenteil 3 ist beidseitig mit nabenartigen Ansätzen 5 versehen, auf die das erste Wälzgratrad 1 bzw. das zweite Scheibenteil 4 und das zweite Wälzgratrad 2 verdreheinstellbar aufgesetzt sind. Es ist erkennbar, daß die Berührungsflächen des ersten und zweiten Wälzgratrades 1 und 2 und des ersten und zweiten Scheibenteils 3 und 4 in bezug auf die Drehachse 6 des Werkzeugs in parallelen Radialebenen liegen. Das erste und zweite Wälzgratrad 1 und 2 sind über einen Umfangsbereich von ca. 160° mit Zähnen 7 versehen, die in die Zahnlücken eines (nicht gezeigten) zahnradartigen Werkstücks eingreifen und dabei die Zahn-Stimkanten desselben entgraten und/oder anfasen.

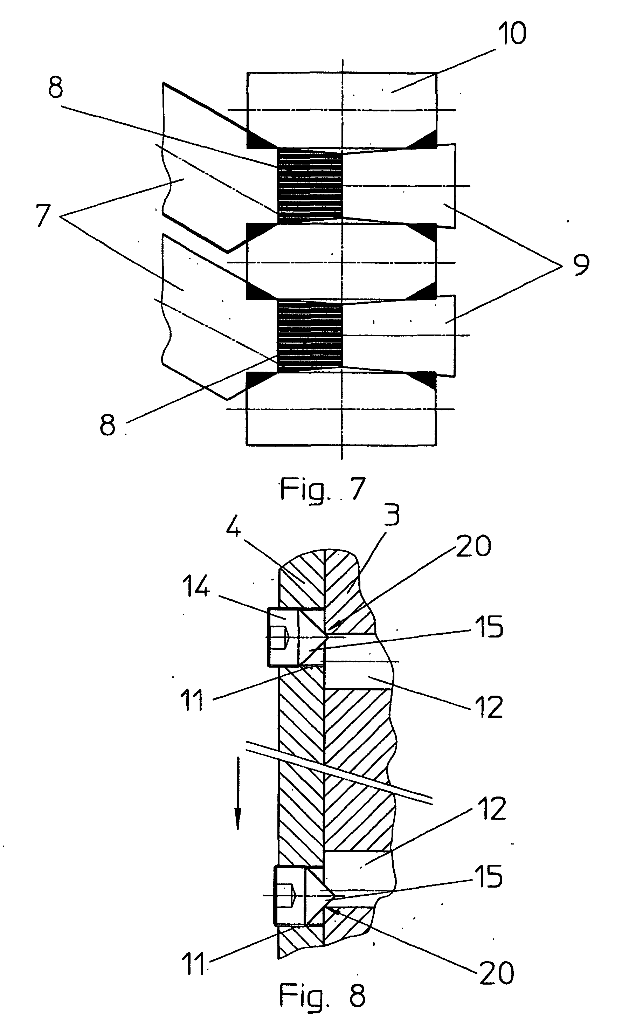

Das erste und das zweite Scheibenteil 3 und 4 sind über einen Umfangsbereich von ungefähr 170° mit Zähnen 8 versehen, die in die Zahnlücken des (nicht gezeigten) Zahnrades eingreifen. Dieser Bereich des ersten und zweiten Scheibenteils 3 und 4 hat die Funktion eines Führungsrades. In dem verbleibenden Umfangsbereich von ca. 190° sind das erste und das zweite Scheibenteil 3 und 4 mit konisch geschliffenen Zähnen 9 versehen, die in die Zahnlücken des (nicht gezeigten) Zahnrades eingreifen. Dieser Umfangsbereich des ersten und zweiten Scheibenteils 3 und 4 hat die Funktion eines Glättrades, indem die konischen Zähne 9 einen möglicherweise von dem Wälzgratrad 1 bzw. 2 erzeugten Sekundärgrat an den Flanken der Zähne 10 des Werkstücks beseitigen (siehe Fig. 7). Es ist erkennbar, daß das erste und zweite Scheibenteil 3 und 4 in dem mit den konischen Zähnen 9 versehenen Umfangsbereich verbreitert ist und einen nach außen vorspringenden Ringflansch aufweist.

Das erste Wälzgratrad 1 und das erste Scheibenteil 3 bzw. das zweite Wälzgratrad 2 und das zweite Scheibenteil 4 werden in einer solchen Drehstellung zusammengefügt, daß der mit konischen Zähnen 9 versehene Umfangsbereich der Scheibenteile 3 und 4 dem zahnlosen Umfangsbereich der Wälzgraträder 1 und 2 gegenüberliegt. Außerdem sind die beiden Scheibenteile 3 und 4 um 180° zueinander versetzt angeordnet, so daß jeweils ein mit der Führung dienenden Zähnen 8 versehener Umfangsbereich einem mit der Glättung dienenden konischen Zähnen 9 versehenen Umfangsbereich gegenüberliegt. Durch diese Anordnung ist eine größere Laufruhe während der Bearbeitung gewährleistet.

Wie dies vorstehend erläutert wurde, haben die konisch geschliffenen Zähne 9 des ersten und zweiten Scheibenteils 3 und 4 die Aufgabe, die beim Anfasen der Zähne 10 des Werkstücks durch die Zähne 7 des ersten und zweiten Wälzgratrades 1 und 2 möglicherweise erzeugten Grataufwürfe zu beseitigen. Damit diese Beseitigung der auch als Sekundärgrat bezeichneten Grataufwürfe einwandfrei abläuft, müssen die konischen Zähne 9 des ersten und zweiten Scheibenteils 3, 4 in einer ganz bestimmten Relativstellung zu den Zähnen 10 des Werkstücks stehen. Diese Relativstellung hängt vom Schrägungswinkel des Werkstücks ab. Aus den eingangs genannten Gründen unterliegt der Schrägungswinkel des Werkstücks aber gewissen Schwankungen. Bei den einzelnen Chargen der zu bearbeitenden Werkstücke können daher geringfügig unterschiedliche Schrägungswinkel vorliegen. Um diesen Schwankungen des Schrägungswinkels Rechnung zu tragen, können die beiden, ein kombiniertes Mitnahme- und Glättrad bildenden Scheibenteile 3 und 4 relativ zueinander verdreht werden. Durch eine entsprechende Veränderung des Winkelabstandes der konischen Zähne 9 der beiden Scheibenteile 3 und 4 kann eine Änderung des Schrägungswinkels des Werkstücks kompensiert werden. Dadurch ist gewährleistet, daß die konischen Zähne 9 der beiden Scheibenteile 3 und 4 mit den Zähnen 10 des Werkstücks ordnungsgemäß in Eingriff gelangen, um möglicherweise bei der Anfasung der Stirnkanten erzeugte Grataufwürfe zu glätten.

Zum Einstellen der Relativstellung der das kombinierte Mitnahme- und Glättrad bildenden beiden Scheibenteile 3 und 4 sind in dem zweiten Scheibenteil 4 mit radialem Abstand zur Drehachse 6 zwei Gewindebohrungen 11 vorgesehen. In dem ersten Scheibenteil 3 sind mit dem gleichen radialen Abstand zur Drehachse 6 zwei Bohrungen 12 vorgesehen, die aber im Vergleich zu den Gewindebohrungen 11 einen anderen Winkelabstand aufweisen. Die Gewindebohrungen 11 können daher mit den Bohrungen 12 nur teilweise zur Deckung gebracht werden. Durch zwei Langlöcher 13 in dem zweiten Wälzgratrad 2 sind zwei Einstellschrauben 14 in die beiden Gewindebohrungen 11 des zweiten Scheibenteils 4 eingeschraubt. Die beiden Einstellschrauben 14 haben einen kegeligen Ansatz 15, der in die zugeordnete Bohrung 12 des ersten Scheibenteils 3 hineinragt. Bei dem gezeigten Ausführungsbeispiel sind die Gewindebohrungen 11 in dem zweiten Scheibenteil 4 unter einem Winkelabstand von 180° angeordnet, wogegen die Bohrungen 12 in dem ersten Scheibenteil 3 unter einem Winkelabstand von ca. 175° angeordnet sind. Es kommt aber lediglich darauf an, daß die beiden Gewindebohrungen 11 mit den Bohrungen 12 nur teilweise zur Deckung gebracht werden können, und daß die sich teilweise überlappenden Bohrungen jeweils den gleichen radialen Abstand zur Drehachse 6 des Werkzeugs haben.

In dem ersten Scheibenteil 3 sind ferner vier Gewindebohrungen 16 im radialen Abstand zur Drehachse 6 vorgesehen, und in dem zweiten Scheibenteil 4 sind in gleichen radialen Abstand vier Langlöcher 17 vorgesehen. Durch entsprechende Langlöcher 18 in dem zweiten Wälzgratrad 2 sind Spannschrauben 19 in die Gewindebohrungen 16 des ersten Scheibenteils 3 eingeschraubt. Zur Einstellung der relativen Verdrehung des das kombinierte Mitnahme- und Glättrad bildenden ersten und zweiten Scheibenteils 3 und 4 werden bei gelösten Spannschrauben 19 die beiden Einstellschrauben 14 so weit in die Gewindebohrungen 11 des zweiten Scheibenteils 4 eingeschraubt, daß beide kegeligen Ansätze 15 an einem Randbereich 20 der Bohrungen 12 des ersten Scheibenteils 3 zur Anlage kommen (Fig. 8). Wenn das zweite Scheibenteil 4 gegenüber dem ersten Scheibenteil 3 gemäß Fig. 8 in Pfeilrichtung geringfügig verdreht werden soll, dann wird die untere Einstellschraube 14 wieder zurückgedreht, und die obere Einstellschraube 14 wird weiter eingeschraubt. Dabei vergrößert sich der am Randbereich 20 der Bohrung 12 des ersten Scheibenteils 3 tangierend anliegende Durchmesser des kegeligen Ansatzes 15 der oberen Einstellschraube 14 ständig und bewirkt so die relative Verdrehung des zweiten Scheibenteils 4 gegenüber dem ersten Scheibenteil 3. Ist die gewünschte Relativstellung erreicht, dann wird die untere Einstellschraube 14 wieder soweit eingeschraubt, bis ihr kegeliger Ansatz 15 am Randbereich 20 der Bohrung 12 tangierend anliegt und so ein ungewolltes Verändern der zuvor eingestellten Relativstellung verhindert. Wenn der Einstellvorgang der relativen Drehstellung der beiden Scheibenteile 3 und 4 beendet ist, dann werden die Spannschrauben 19 angezogen.

Mit einem ähnlichen Einstellmechanismus, der gleichfalls zwei Einstellschrauben 21 umfaßt, kann die relative Drehstellung der beiden Wälzentgraträder 1 und 2 eingestellt werden. Mit Spannschrauben 22 können das erste und zweite Wälzgratrad 1, 2 und mit Spannschrauben 19 das erste und zweite Scheibenteil 3 und 4 in der zuvor eingestellten Relativstellung drehfest miteinander verbunden werden.

Abweichend von dem gezeigten Ausführungsbeispiel kann das erste Scheibenteil 3 mit einem Bund versehen sein, so daß zwischen den beiden Scheibenteilen 3 und 4 eine Nut gebildet wird. Diese Nut ist vorteilhaft zur Beseitigung der bei der Bearbeitung der Stirnkanten entstehenden Späne, die andernfalls in die Zahnflanken des Werkstücks eingedrückt werden könnten. Zu diesem Zweck könnte zwischen den beiden Scheibenteilen 3 und 4 auch ein zusätzliches drittes Scheibenteil angeordnet sein, das nur mit der Führung dienenden Zähnen versehen ist.

Wie aus der vorstehenden Beschreibung hervorgeht, können die an den beiden Scheibenteilen 3 und 4 ausgebildeten Zähne 9 ein einfach herzustellendes Keilprofil haben. Die zum Glätten der linken und rechten Stirnkanten eines Werkstücks dienenden Zähne können auf einfache Weise an den jeweiligen Schrägungswinkel des bearbeiteten Werkstücks angepaßt werden. Dies wird durch eine relative Verdrehung der beiden Scheibenteile 3 und 4 bewirkt. Diese Relativverdrehung zum Ausgleich von Schwankungen des Schrägungswinkels der zu bearbeitenden Werkstücke unterschiedlicher Chargen ist sehr klein. Der ordnungsgemäße Eingriff der zur Führung dienenden Zähne 8 der beiden Scheibenteile 3 und 4 und der Zähne 7 der beiden Wälzgraträder 1 und 2 mit den Zähnen 10 des Werkstücks wird dadurch nicht beeinträchtigt.

## Patentansprüche

1. Werkzeug zum Anfasen und Entgraten der stirnseitigen Zahnkanten von gerad- und schrägverzahnten Zahnrädern mit mindestens einem stirnseitig zum Werkstück angeordneten und mit diesem kämmenden, die Zahnkanten bearbeitenden Wälzgratrad (1,2), einer axial neben dem Wälzgratrat angeordneten, mit diesem drehfest verbundenen und mit dem Werkstück kämmenden verzahnten Distanzscheibe, die über einen Teil des Umfangs als Mitnahmerad (8) und über den übrigen Teil des Umfangs als die Randzonen der Zahnflanken bearbeitendes Glättrad (9) äusgebildet ist, **dadurch gekennzeichnet, daß** die Distanzscheibe in mindestens zwei Scheiben (3, 4) unterteilt ist, die dreheinstellbar miteinander verbunden sind.

2. Werkzeug nach Anspruch 1, **dadurch gekennzeichnet, daß** die beiden Scheiben (3, 4) in Umfangsrichtung so versetzt angeordnet sind, daß der als Glättrad dienende Bereich (9) der einen Scheibe dem als Mitnahmerad dienenden Bereich (8) der anderen Scheibe gegenüberliegt

3. Werkzeug nach Anspruch 1 oder 2, **dadurch gekennzeichnet, daß** die eine Scheibe (4) mit zwei in Umfangsrichtung versetzten Gewindebohrungen (11) versehen ist, daß die andere Scheibe (3) mit zwei Bohrungen (12) versehen ist, die einen anderen Winkelabstand aufweisen als die Gewindebohrungen (11) und mit diesen teilweise überlappen, und daß in die Gewindebohrungen (11) der einen Scheibe (4) Einstellschrauben (14) mit kegeligem Ansatz (15) eingeschraubt sind, derart, daß die kegeligen Ansätze (15) die Ränder (20) der Bohrungen (12) der anderen Scheibe (3) nur mit einem Teilbereich berühren.

## Claims

1. Tool for chamfering and deburring end face tooth edges of spur and helical gears, comprising at least one rolling deburring wheel (1, 2) for machining the tooth edges, arranged at an end face relative to the workpiece and meshing therewith, a toothed spacer disc arranged axially adjacent to the rolling deburring wheel, connected non-rotatably thereto and meshing with the workpiece, said spacer disc being configured as a driving wheel (8) over a portion of its periphery and as a smoothing wheel (9) for machining the edge zones of the tooth flanks over the remaining portion of its periphery, **characterised in that** the spacer disc is divided into at least two discs (3, 4) which are connected to one another in a rotationally adjustable manner.

2. Tool according to claim 1, **characterised in that** the two discs (3, 4) are offset in the circumferential direction such that the area (9) of one disc serving as a smoothing wheel is located opposite the area (8) of the other disc serving as a driving wheel.

3. Tool according to claim 1 or 2, **characterised in that** one disc (4) is provided with two threaded bores (11) offset in the circumferential direction, **in that** the other disc (3) is provided with two bores (12) which have a different angular spacing than the threaded bores (11) and partially overlap same, and **in that** adjusting screws (14) having a conical end face (15) are screwed into the threaded bores (11) of the one disc (4) such that the conical end faces (15) contact the edges (20) of the bores (12) of the other disc (3) with only a partial area.

## Revendications

1. Outil de chanfreinage et d'ébavurage des flancs extrêmes de roues dentées à dentures droite et oblique, comprenant au moins une roue d'ébarbage (1, 2) qui usine les flancs des dents et est agencée frontalement vis-à-vis de la pièce à travailler, dans laquelle elle engrène ; et un disque denté d'espacement qui jouxte axialement la roue d'ébarbage à laquelle il est relié avec verrouillage rotatif, engrène dans la pièce à travailler, et est réalisé sous la forme d'une roue d'entraînement (8) sur une partie du pourtour et, sur la partie restante du pourtour, sous la forme d'une roue de lissage (9) usinant les zones marginales des flancs des dents, **caractérisé par le fait que** le disque d'espacement est scindé en au moins deux disques (3, 4) reliés l'un à l'autre avec faculté de réglage en rotation.

2. Outil selon la revendication 1, **caractérisé par le fait que** les deux disques (3, 4) sont décalés dans le sens périphérique, de façon telle que la région (9) de l'un des disques, servant de roue de lissage, se trouve en vis-à-vis de la région (8) de l'autre disque, servant de roue d'entraînement.

3. Outil selon la revendication 1 ou 2, **caractérisé par le fait que** l'un (4) des disques est muni de deux trous taraudés (11) décalés dans le sens périphérique ; **par le fait que** l'autre disque (3) est pourvu de deux perçages (12) présentant un espacement angulaire autre que celui des trous taraudés (11) avec lesquels ils sont partiellement en chevauchement ; et **par le fait que** des vis de réglage (14) à pointeau tronconique (15) sont vissées dans les trous taraudés (11) de l'un (4) des disques, de telle sorte que les pointeaux tronconiques (15) ne touchent les bords (20) des perçages (12) de l'autre disque (3) que par une zone partielle.
